# FASCICULE DE BREVET EUROPEEN

(11) **EP 0 454 537 B1**
(45) Date de publication et mention de la délivrance du brevet: **06.11.1996**
(21) Numéro de dépôt: 91400999.8
(22) Date de dépôt: 16.04.1991
(51) Int. Cl.: G08G 3/02

(54) **Procédé de codage pour système anticollision pour la navigation maritime**
Kodierverfahren für Antikollisionsanlage für die Seefahrt
Encoding method for anti-collision system for maritime navigation

(30) Priorité: 27.04.1990 FR 9005396
(43) Date de publication de la demande: 30.10.1991
(73) Titulaire: THOMSON-CSF, 75008 Paris (FR)
(72) Inventeur: Janex, Albert, F-92045 Paris la Defense (FR)
(74) Mandataire: Chaverneff, Vladimir

(56) Documents cités:
- EP-A- 0 074 865
- EP-A- 0 154 018
- WO-A-88/06385
- FR-A- 2 601 168
- US-A- 4 014 004

## Description

La présente invention se rapporte à un procédé de codage pour système anticollision pour la navigation maritime.

On connaît d'après le brevet français 2 601 168 un système anticollision pour la navigation maritime dans lequel chaque navire équipé comporte un émetteur émettant de façon répétitive un message contenant en particulier les coordonnées géographiques, la vitesse et le cap de son propre navire, et un récepteur relié à un dispositif de visualisation affichant, en particulier sous forme de symboles, des informations homologues reçues des autres navires équipés de la même façon.

Un tel système facilite grandement les manoeuvres des navires, en particulier dans les zones où la densité d'obstacles (autres navires, bouées, jetées, ... ) est élevée.

Dans ce système connu, il est également prévu d'inclure dans les messages émis le code d'identification du navire avec lequel on veut entrer en communication. Ce dernier est alerté automatiquement dès que son récepteur capte le message. Les opérateurs de ces deux navires peuvent alors engager des liaisons en phonie, par exemple pour coordonner leurs manoeuvres. Cependant, une telle liaison en phonie présente des inconvénients : les fréquences radio disponibles pour de telles liaisons sont souvent très chargées et même saturées. De plus, il est rare que les opérateurs parlent la même langue.

Par ailleurs, dans ce système connu, les messages comportent également l'identité du navire émetteur. Le code d'identité est une suite d'éléments binaires dont une partie sert à la définition du type de navire (pétrolier, ferry, cargo, ... ) et dont une autre partie identifie de façon non ambiguë le navire émetteur. Il suffit que cette autre partie soit assez longue pour permettre de faire correspondre à son contenu binaire un navire utilisateur et un seul au niveau mondial. Il suffit de disposer d'un lexique pour remonter du code vers l'utilisateur correspondant.

Cependant, une telle possibilité de correspondance biunivoque entre un code et un utilisateur peut présenter un inconvénient. En effet, certains utilisateurs potentiels du système ne tiennent pas pour des raisons diverses (confidentialité, concurrence commerciale, ...) à ce qu'on sache où ils se trouvent. Le procédé d'identification mentionné ci-dessus peut les inciter à ne pas utiliser leurs appareils, privant ainsi les autres utilisateurs se trouvant à proximité des avantages du système. De plus, la complexité d'établissement d'un lexique à l'échelle mondiale peut présenter une lourdeur propre à freiner l'adoption du système. Un tel procédé est divulgué par le document FR-A-2 601 168.

La présente invention a pour objet un système anticollision du type précité qui permette à deux navires équipés, ayant manifesté leur désir d'engager un dialogue de pouvoir le faire sans gêne même en utilisant des fréquences de liaison encombrées et avec une bonne intelligibilité même lorsqu'ils ne parlent pas la même langue, ce système assurant un minimum de confidentialité aux utilisateurs le désirant.

Le procédé conforme à l'invention est un procédé de codage pour système anticollision pour la navigation maritime, selon lequel chaque navire le mettant en oeuvre émet de façon répétitive, sur un canal commun à l'ensemble des navires concernés, les informations comportant des données relatives à sa position géographique, à son cap et à sa vitesse, et reçoit des informations homologues des navires environnants, qu'il affiche par symboles sur un écran de type panoramique, caractérisé par le fait que lesdites informations comportent un code d'identification qui est un nombre binaire sans signification en égard à l'identité réelle du navire émetteur servant d'adresse pour l'échange de messages. Pour éviter toute ambiguïté au cas où au moins deux navires proches auraient le même code d'identification, l'invention prévoit, dès détection d'une telle multiple utilisation, sa signalisation aux utilisateurs concernés afin qu'au moins l'un d'eux change de code.

Selon un autre aspect de l'invention, pour diminuer ou supprimer les risques de multiple utilisation d'un même code d'identification, on prévoit l'utilisation de codes suffisamment longs et d'y inclure une partie distinctive générée automatiquement par le système. Cette partie distinctive peut être générée par un générateur pseudo-aléatoire.

La présente invention sera mieux comprise à la lecture de la description détaillée d'un mode de réalisation, pris à titre d'exemple non limitatif et illustré par le dessin annexé sur lequel :
- la figure 1 est un bloc diagramme d'un dispositif équipant un navire et faisant partie du système conforme à l'invention, et,
- la figure 2 est une vue en plan d'un exemple d'écran du dispositif de visualisation de l'équipement de la figure 1.

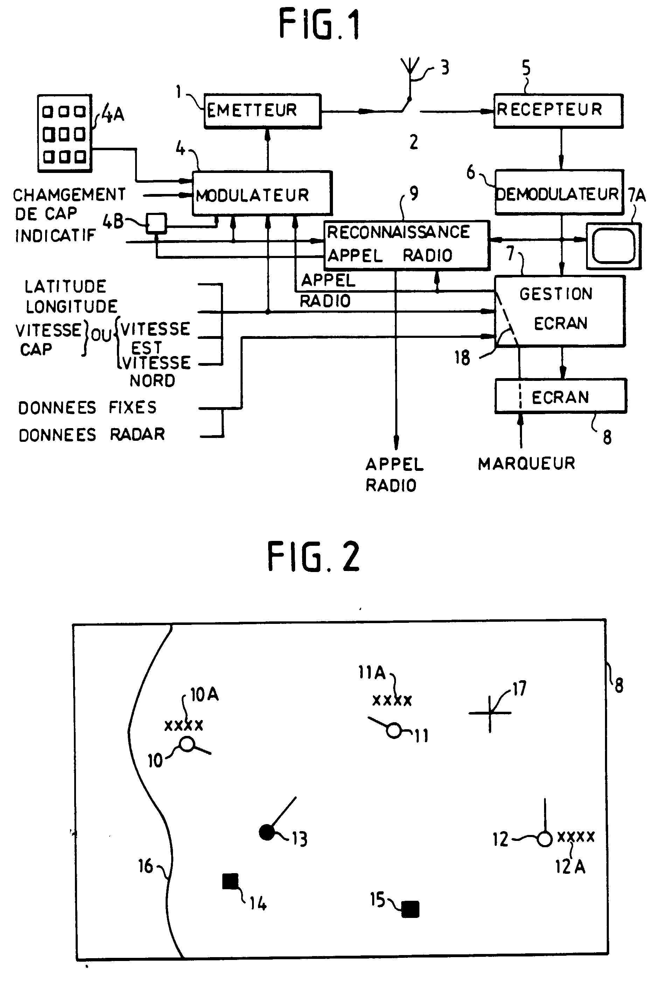

Chaque navire participant au système anticollision de l'invention est équipé d'un dispositif tel que celui schématiquement représenté sur la figure 1, et sera dénommé par la suite "navire équipé".

Le dispositif représenté à la figure 1 comporte un émetteur 1 émettant des messages de façon discontinue avec un taux de charge (défini comme le rapport de la durée d'émission à la durée d'arrêt) moyen très faible, de l'ordre de 10⁻⁴ à 10⁻⁵. La puissance et la fréquence d'émission sont choisies de façon à limiter la portée de l'émetteur 1 à quelques dizaines de kilomètres. La limitation peut être celle due à la courbure terrestre si l'on choisit une fréquence d'émission dont la propagation se fait en vue directe, par exemple une fréquence de la bande UHF (plusieurs centaines de MHz) ou au-delà, sans toutefois dépasser la bande X afin que la propagation reste pratiquement insensible aux conditions météorologiques. La fréquence Fₒ de l'émetteur est la même pour tous les émetteurs et récepteurs du système.

L'émetteur 1 est relié via un commutateur 2 à une antenne 3 réalisée de façon à assurer une émission omnidirectionnelle dans le plan horizontal.

L'émetteur 1 est d'autre part relié à un modulateur 4. Ce modulateur 4 élabore un "mot" binaire regroupant l'ensemble des informations à émettre et le transpose en un signal modulant l'émetteur 1. La forme de modulation est de genre impulsionnel de façon à permettre l'absence totale d'émission en dehors du temps pendant lequel le message est transmis. Cependant, le type même de modulation de l'information n'est pas imposé par le procédé de l'invention : chaque élément binaire peut être codé selon l'une quelconque des techniques connues de codage, comme par exemple le codage en position d'impulsion, ou par saut de phase.

Le message émis comporte les informations suivantes :
- les coordonnées du navire, de préférence en latitude et en longitude, codées par exemple sur vingt-deux éléments binaires chacune. Ces coordonnées sont fournies par le système de radionavigation du navire. Les navires sont généralement équipés d'appareils de radionavigation leur donnant, en permanence, leur position géographique absolue de façon précise et fiable. La précision requise par le procédé anticollision de l'invention est de l'ordre de la centaine de mètres. Par exemple, le système de radionavigation connu sur l'appellation " NAVSTAR" satisfait à ces conditions.
- la vitesse et le cap du navire, ces informations étant généralement disponibles sur tout navire, tout au moins sous forme analogique, qu'il suffit de convertir sous forme numérique. Ces informations peuvent être codées avec une précision suffisante par six et huit éléments binaires respectivement.
- éventuellement (si la norme le prévoit), le changement de cap, codé par deux éléments binaires : virage à bâbord ou à tribord. Une telle information peut être fournie automatiquement par tout dispositif connu d'indication de sens de rotation, activé dès le début de la manoeuvre. La norme pourrait également prévoir une information plus riche et plus anticipée que la seule indication du changement de cap, à savoir la valeur du cap futur, mais cela nécessiterait son introduction manuelle (par clavier), et présenterait des risques d'oubli de la part de l'opérateur.

Un indicatif d'appel ou code d'identification, est décrit plus en détails ci-dessous.

De façon avantageuse, ces informations sont précédées, selon une technique classique en transmission de messages, d'un préambule permettant d'initialiser certains circuits du récepteur. Egalement de façon avantageuse, ces informations sont complétées par des éléments binaires formant un symbole de fin de message, et, si on estime que la répétition permanente des messages n'est pas suffisante pour éliminer toutes les erreurs, on peut ajouter des éléments binaires de correction d'erreurs (éléments binaires de parité par exemple).

Comme précisé ci-dessus, si le navire est équipé d'un récepteur de radionavigation du type NAVSTAR, un tel récepteur fournit la plupart des informations citées ci-dessus avec une précision très supérieure à celle nécessaire au système de l'invention. Dans ce cas, on peut négliger, pour chaque information, les éléments binaires de plus faibles poids, superflus, pour ne conserver que ceux estimés significatifs et présentant la précision nécessaire et suffisante pour la mise en oeuvre du procédé de l'invention, comme précisé ci-dessus. Ainsi, la longueur du message émis est d'environ une centaine d'éléments binaires au moins. Si la bande passante affectée au système est de l'ordre de quelques mégahertz, le message est transmis en quelques dizaines de microsecondes.

Si chaque navire équipé émet un tel message avec une périodicité d'environ une seconde, la charge de trafic induite par un navire sur le système est comprise entre 10⁻⁴ et 10⁻⁵. Si par exemple une centaine de navires sont présents simultanément dans une même zone géographique (telle qu'un port), la charge en trafic du système n'est que de 10⁻² à 10⁻³, ce qui garantit une bonne probabilité de non brouillage mutuel des messages. Encore faut-il remarquer que l'on a choisi là un cas relativement défavorable, puisque les ordres de grandeur des temps de manoeuvre d'évitement des navires sont très nettement supérieurs à la seconde, et que l'on pourrait augmenter fortement la période de répétition des messages, et diminuer ainsi leur probabilité de brouillage mutuel.

De façon avantageuse on rend aléatoire l'instant d'émission de chaque message, puisque le brouillage mutuel reste possible du fait de la non-synchronisation des émissions des différents navires. Ainsi, pour l'exemple cité ci-dessus d'une période de répétition d'une seconde, cette valeur ne sera qu'une valeur statistique moyenne, la période vraie étant affectée d'une large dispersion. Il en résulte que tout message brouillé reçu d'un navire donné ne le sera pas de façon durable. En outre, la forte redondance des messages envoyés (pour une périodicité d'environ une seconde, un même message est répété plusieurs fois avant un changement significatif de cap et/ou de vitesse et/ou de position géographique) permet de négliger le message reçu brouillé.

L'inverseur 2 relie, en dehors des courts laps de temps d'émission de l'émetteur 1, l'antenne 3 à un récepteur 5 calé sur la fréquence commune du système. Le récepteur 5 est relié à un démodulateur de données 6 extrayant les informations du signal reçu, en réalisant les opérations inverses de celles effectuées dans le modulateur 4. Ce modulateur est également relié à un dispositif 4A d'introduction de données, tel qu'un clavier.

Le démodulateur 6 est relié via un organe 7 de gestion d'écran à un écran de visualisation 8. Les éléments 7 et 8 peuvent par exemple être un micro-ordinateur et son moniteur de visualisation. Ces éléments 7 et 8 peuvent être complétés par un dispositif 7A d'affichage du code d'identification d'un ou de plusieurs navires environnants.

L'écran 8 a pour but de présenter à un opérateur l'ensemble de l'environnement de son navire par exploitation des informations reçues depuis les navires équipés environnants, ainsi que des informations reçues de ses propres équipements. On a représenté sur la figure 2 un exemple non limitatif d'informations pouvant être visualisées sur l'écran 8. L'affichage de ces informations peut se faire sous une forme analogue à celle de l'écran d'un radar panoramique.

Suivant l'exemple de la figure 2, l'écran 8 affiche sous forme de gros points lumineux les différents navires (10, 11, 12 par exemple), son propre navire (référencé 13) étant de couleur et/ou de forme et/ou de luminosité différentes de celles des autres navires. Par ailleurs, différentes formes et/ou couleurs de points peuvent correspondre à différents types de navires. Chaque point représentant un navire est prolongé par un segment de droite représentant le vecteur vitesse du navire correspondant. La longueur de ce vecteur est proportionnelle à la vitesse du navire, et son orientation correspond au cap de ce navire. De façon avantageuse, on peut également représenter par un symbole particulier, par exemple par un point ou un trait de couleur différente, l'information de changement de cap près du vecteur vitesse, à sa gauche ou à sa droite selon le sens du changement. La présentation générale de l'écran 8 peut être faite en situant le nord vers le haut de l'écran, mais on peut également, de façon avantageuse, faire correspondre le haut de l'écran avec la proue du navire, la ligne de foi de ce navire étant alors fixe. Le vecteur vitesse de chaque navire peut correspondre à une vitesse absolue, ou bien, selon une variante, à une vitesse relative par rapport à celle du navire 13 (dont le propre vecteur vitesse est alors nul), les différents vecteurs de vitesse relative des autres navires étant alors déterminés par composition vectorielle de leur vitesse propre et de celle du navire 13. Le point représentant le navire 13 peut aussi bien être situé au centre de l'écran qu'être décentré dans une direction opposée à son vecteur vitesse pour favoriser la "vue sur l'avant".

De façon avantageuse, on affiche près du point représentant chaque autre navire (10, 11, 12 sur la figure 2) son code d'identification ( 10A, 11A, 12A respectivement).

Egalement de façon avantageuse, chaque navire équipé comporte un radar lui permettant de détecter les navires environnants non équipés ou dont l'équipement est en panne, ainsi que les obstacles fixes (rochers, côtes, etc... ). On a représenté sur la figure 2 deux échos 14, 15 représentant des navires non équipés ainsi que le profil 16 d'une côte. Les échos 14, 15 sont, de préférence, visualisés sous une forme et/ou une couleur différentes de celles des points 10 à 13 de façon à faire remarquer immédiatement à l'opérateur qu'ils correspondent à des navires non équipés ou dont l'équipement est en panne, et que l'absence de vecteur vitesse correspondant ne signifie pas une vitesse nulle de ces navires.

Toutes les transformées de coordonnées, de vecteurs et, le cas échéant, d'informations provenant du radar de bord, sont faites, de façon connue en soi, par l'organe de gestion 7, dont la réalisation est évidente pour l'homme de l'art à la lecture de la présente description.

En outre, des données fixes stockées dans une mémoire de masse peuvent également être fournies à l'organe de gestion 7. On peut ainsi représenter sur l'écran des données cartographiques telles que côte, bouées, phare, etc.

Selon une variante avantageuse de l'invention, un équipement de navire comporte en outre un circuit 9 de reconnaissance d'appel radio relié d'une part à la sortie du démodulateur 6, d'autre part à un clavier d'introduction de données (non représenté mais dont la fonction pourrait être assurée par 4A) sur lequel l'opérateur compose l'indicatif d'appel (qui est en fait, avantageusement, un code d'identification tel que décrit ci-dessous) du navire avec lequel il veut entrer en contact, cet indicatif étant également envoyé au modulateur 4 et incorporé au message périodiquement émis par l'émetteur 1. Le circuit 9 peut être un simple comparateur comparant, dans le navire appelé, l'indicatif reçu du navire appelant à son propre indicatif, et déclenchant en cas d'égalité, une alarme sonore et/ou visuelle. Bien entendu, le message reçu par le navire appelé contient l'indicatif du navire appelant, cet indicatif pouvant être affiché par l'écran 8 du navire appelé. Cet affichage peut se faire par exemple en clair (indicatif alpha-numérique) dans un coin de cet écran. Selon une variante avantageuse, au lieu de cet affichage ou en plus de cet affichage, un symbole peut apparaître à proximité du point (tel que l'un des points 10 à 12) figurant le navire appelant, ou bien ce point lui-même peut être modifié : le symbole peut être par exemple un cercle entourant le point figurant le navire appelant, et/ou ce point peut clignoter ou apparaître en surbrillance.

Selon une autre variante de l'invention, on associe l'organe 7 de gestion d'écran à un dispositif du genre "souris" communément utilisé avec les micro-ordinateurs, ce dispositif produisant sur l'écran 8 un marqueur mobile 17 ayant par exemple la forme d'une croix. Lorsque ce marqueur est superposé au symbole représentatif d'un navire que l'opérateur veut appeler par radio, cet opérateur manoeuvre le bouton de déclenchement (ou "click") de la "souris". Cet ordre est traité par l'organe 7 qui produit un indicatif d'appel correspondant (symbolisé par le trait interrompu 18) et l'envoie au modulateur 4. Pour produire cet indicatif, l'organe 7 mémorise les indicatifs reçus de tous les navires avoisinants (affichés sur l'écran 8), établit une relation entre le point sur lequel s'est arrêté le marqueur 17 et l'indicatif correspondant, et envoie cet indicatif. Ces fonctions assurées par l'organe 7 étant évidentes à réaliser pour l'homme de l'art, ne seront pas décrites plus en détail. Bien entendu, dans le navire appelé, ladite "souris" peut servir à acquitter l'appel, et éventuellement à déclencher une liaison radio. L'usage de la "souris" évite dans les deux navires (appelant et appelé) d'éventuelles erreurs dues à une mauvaise introduction d'indicatif par clavier.

Grâce à ladite souris ou au clavier 4A, l'opérateur d'un navire peut introduire et/ou modifier le "code d'identification" de son navire.

Ce code d'identification peut être quelconque. Il n'est pas nécessairement tiré d'un lexique, et ne permet pas d'identifier réellement son utilisateur. Ce code est un nombre binaire sans signification servant simplement d'adresse dans l'échange des messages tel que décrit en détails ci-dessous.

Toutefois, on peut avantageusement le conformer de la façon suivante :
- on peut attribuer quelques-uns des éléments binaires de ce nombre à l'identification du type de navire. Une telle information est utile pour la concertation des manoeuvres de navires proches les uns des autres.
- l'un des éléments binaires du nombre peut servir à indiquer si le code est tiré d'un lexique (certains navires peuvent désirer se faire identifier, ou en tout cas ne pas avoir de raisons de cacher leur identité) ou s'il n'a pas de signification propre.
- le reste du code, s'il n'est pas tiré d'un lexique, a un nombre d'éléments binaires suffisant pour que la probabilité d'utilisation fortuite de deux codes identiques dans une même zone soit négligeable, par exemple environ 16 éléments binaires.
- Selon une première variante, le choix du reste du code est laissé au gré de l'utilisateur. Cependant, une telle solution peut présenter des inconvénients : utilisation malveillante du code d'un autre utilisateur, et utilisation plus fréquente de certains codes simplifiés augmentant le risque de coïncidence de deux codes dans une même zone géographique.
- Selon une seconde variante avantageuse, le choix du reste du code se fait de façon autonome par un processeur 4B, relié au modulateur 4 et au circuit 9. Ce processeur 4B peut générer une séquence pseudo-aléatoire lors de sa mise en route.
- Si l'on veut éviter l'identification durable de l'utilisateur, le processeur 4B peut changer périodiquement ladite séquence pseudo-aléatoire. Le processeur peut effectuer ce changement en période d'inactivité (absence de toute réception pendant un grand nombre de périodes successives).
- Bien entendu, si le processeur 4B détecte l'utilisation fortuite par un autre utilisateur (détection via le circuit 9) du code envoyé par son émetteur 1, il peut commander le changement immédiat de son code, ou tout au moins de la séquence pseudo-aléatoire qu'il élabore.

Lorsqu'une communication est établie entre deux navires, et que chacun d'eux a reçu de l'autre le message décrit en détail en référence à la figure 2 et permettant d'afficher sur l'écran 8 les données correspondantes, ces navires peuvent échanger d'autres genres de messages remplaçant avantageusement une liaison en phonie. Ces autres genres de messages peuvent concerner en particulier les intentions de manoeuvres de ces deux navires. Pour diminuer l'encombrement du canal de transmission et pour faciliter la compréhension de ces messages, on les code d'après un lexique contenant la liste des messages (mots et/ou phrases) usuels pour tous les cas possibles de manoeuvres tels que : intention de garder le cap, de virer à bâbord ou à tribord, en attente de remorqueur, en panne, etc... Bien entendu, chaque opérateur de navire possède la traduction du lexique dans sa propre langue. On peut également prévoir un code pour "demande de transmission en phonie" dans le cas, relativement peu probable, où au moins l'un des opérateurs aurait à transmettre un message ne figurant pas dans le lexique. La fréquence à utiliser pour cette liaison en phonie peut aussi être indiquée. Bien entendu, trois navires ou plus peuvent participer en même temps à cet échange de messages codés : du fait de leur brièveté (ils peuvent par exemple ne comporter que huit éléments binaires, pour le codage de 256 messages différents) il y a peu de risques de simultanéité d'émission par plusieurs navires. Pour diminuer ces risques de simultanéité, les messages peuvent être répétés plusieurs fois, à des intervalles déterminés aléatoirement.

Les codes des messages codés peuvent être affichés sur le moniteur 7A ou sur l'écran 8. Selon une variante avantageuse, la traduction en clair de ces codes est affichée, grâce à un générateur de caractères dont la réalisation est évidente pour l'homme de l'art. De même, pour éviter d'avoir à feuilleter un lexique, on peut remplacer le clavier 4A par un dispositif d'affichage, par exemple du type à menus déroulants ou à icônes, affichant tous les messages disponibles, groupés par types. Un dispositif de pointage, par exemple du type à " souris ", permet d'activer le message désiré, et d'envoyer aussitôt le code correspondant.

## Revendications

1. Procédé de codage pour système anticollision pour la navigation maritime, selon lequel chaque navire le mettant en oeuvre émet de façon répétitive, sur un canal commun à l'ensemble des navires concernés, les informations comportant des données relatives à sa position géographique, à son cap et à sa vitesse, et reçoit des informations homologues des navires environnants, qu'il affiche par symboles sur un écran de type panoramique, caractérisé par le fait que lesdites informations comportent un code d'identification qui est un nombre binaire sans signification en égard à l'identité réelle du navire émetteur servant d'adresse pour l'échange de messages.

2. Procédé selon la revendication 1, caractérisé par le fait qu'au cas où au moins deux navires proches auraient le même code d'identification, cette multiple utilisation est, dès détection, signalée aux utilisateurs concernés afin qu'au moins l'un d'eux change de code.

3. Procédé selon les revendications 1 ou 2, caractérisé par le fait qu'on inclut dans le code d'identification une partie distinctive générée automatiquement par le système.

4. Procédé selon la revendication 3, caractérisé par le fait que la partie distinctive est générée par un générateur pseudo-aléatoire.

5. Procédé selon l'une des revendications précédentes, caractérisé par le fait que le code d'identification comprend l'identification du type de navire.

6. Procédé selon l'une des revendications précédentes, caractérisé par le fait que le code d'identification comprend un élément indiquant si le code est tiré d'un lexique.

7. Procédé selon l'une des revendications 3 à 6, caractérisé par le fait que la partie distinctive du code d'identification est modifiée périodiquement.

8. Procédé selon la revendication 7, caractérisé par le fait que la modification a lieu en période d'inactivité.

9. Procédé selon l'une des revendications précédentes, caractérisé par le fait que lesdites informations comportent également des messages codés, faisant partie d'un lexique dont disposent tous les utilisateurs, dans leur propre langue, ce lexique contenant des messages susceptibles d'être échangés entre navires.

10. Procédé selon la revendication 9, caractérisé par le fait que les messages du lexique comportent des mots et/ou phrases nécessaires aux différentes manoeuvres que peuvent effectuer des navires.

11. Procédé selon les revendications 9 ou 10, caractérisé par le fait que les messages du lexique sont répétés plusieurs fois, à des intervalles déterminés aléatoirement.

## Patentansprüche

1. Kodierverfahren für ein Antikollisionssystem in der Schiffahrt, gemäß dem jedes dieses System anwendende Schiff wiederholt auf einem gemeinsamen Kanal an alle betroffenen Schiffe die Informationen mit den Daten bezüglich seiner geographischen Lage, seines Kurses und seiner Geschwindigkeit aussendet und gleichartige Informationen von den Schiffen in der Umgebung empfängt, wobei diese Informationen durch Symbole auf einem Panoramabildschirm angezeigt werden, dadurch gekennzeichnet, daß die Informationen einen Identifikationskode enthalten, der eine Binärzahl ohne Bedeutung hinsichtlich der tatsächlichen Identität des die Informationen aussendenden Schiffes ist, aber als Adresse für den Austausch von Nachrichten dient.

2. Verfahren nach Anspruch 1, dadurch gekennzeichnet, daß für den Fall, daß mindestens zwei Schiffe in der Nähe den gleichen Identifikationskode verwenden, diese Mehrfachverwendung den betroffenen Benutzern sofort nach der Erfassung gemeldet wird, damit mindestens einer von ihnen seinen Kode ändert.

3. Verfahren nach Anspruch 1 oder 2, dadurch gekennzeichnet, daß im Identifikationskode ein Unterscheidungsteil enthalten ist, der automatisch vom System erzeugt wird.

4. Verfahren nach Anspruch 3, dadurch gekennzeichnet, daß der Unterscheidungsteil von einem Pseudozufallsgenerator erzeugt wird.

5. Verfahren nach einem der vorhergehenden Ansprüche, dadurch gekennzeichnet, daß der Identifikationskode die Identifizierung des Schiffstyps enthält.

6. Verfahren nach einem der vorhergehenden Ansprüche, dadurch gekennzeichnet, daß der Identifikationskode ein Element enthält, das angibt, ob der Kode aus einem Verzeichnis entnommen ist.

7. Verfahren nach einem der Ansprüche 3 bis 6, dadurch gekennzeichnet, daß der Unterscheidungsteil des Identifikationskodes periodisch verändert wird.

8. Verfahren nach Anspruch 7, dadurch gekennzeichnet, daß die Veränderung in Zeiten einer Inaktivität erfolgt.

9. Verfahren nach einem der vorhergehenden Ansprüche, dadurch gekennzeichnet, daß die Informationen auch kodierte Meldungen enthalten, die in einem Lexikon stehen, über das die Benutzer in ihrer eigenen Sprache verfügen, wobei dieses Lexikon Meldungen enthält, die von Schiffen ausgetauscht werden können.

10. Verfahren nach Anspruch 9, dadurch gekennzeichnet, daß die Meldungen des Lexikons Wörter und/oder Sätze enthalten, die für die verschiedenen Manöver notwendig sind, welche Schiffe ausführen können.

11. Verfahren nach Anspruch 9 oder 10, dadurch gekennzeichnet, daß die Meldungen aus dem Lexikon mehrfach gemäß zufällig bestimmten Intervallen wiederholt werden.

## Claims

1. Encoding method for an anti-collision system for sea navigation, according to which each ship implementing said method makes repetitive transmissions, on a channel common to all the ships concerned, of the items of information comprising data pertaining to its geographic position, course and speed, and receives homologous information from surrounding ships that it displays by symbols on a panoramic type screen, characterized in that said items of information include an identification code which is a binary number of no significance as regards the actual identity of the transmitting ship serving as an address for the exchange of messages.

2. Method according to Claim 1, characterized in that, if at least two ships close to each other have the same identification code, this multiple use, once it is detected, is reported to the users concerned so that at least one of them changes its code.

3. Method according to Claims 1 or 2, characterized in that there is included, in the identification code, a distinctive part generated automatically by the system.

4. Method according to Claim 3, characterized in that the distinctive part is generated by a pseudo-random generator.

5. Method according to any one of the above claims, characterized in that the identification code includes the identification of the type of ship.

6. Method according to any one of the above claims, characterized in that the identification code includes an element indicating whether the code is taken from a glossary.

7. Method according to Claims 3 to 6, characterized in that the distinctive part of the identification code is modified periodically.

8. Method according to Claim 7, characterized in that the modification takes place during a period of inactivity.

9. Method according to any one of the above claims, characterized in that said items of information also include encoded messages, forming part of a glossary at the disposal of all the users, in their own language, this glossary containing messages liable to be exchanged between ships.

10. Method according to Claim 9, characterized in that the messages of the glossary include words and/or phrases necessary for the different manoeuvres that may be carried out by ships.

11. Method according to Claims 9 or 10, characterized in that the messages of the glossary are repeated several times, at randomly determined intervals.
